# EUROPÄISCHE PATENTSCHRIFT

(11) **EP 4 482 126 B1**
(45) Veröffentlichungstag und Bekanntmachung des Hinweises auf die Patenterteilung: **20.05.2026**
(21) Anmeldenummer: 23180287.7
(22) Anmeldetag: 20.06.2023
(51) Int. Cl.: H04L 69/321, H04L 67/12, H04L 67/55

(54) **VERFAHREN UND SYSTEM ZUR DATENÜBERMITTLUNG INNERHALB EINES INDUSTRIELLEN AUTOMATISIERUNGSSYSTEMS UND AUTOMATISIERUNGSGERÄT**
METHOD AND SYSTEM FOR DATA TRANSMISSION WITHIN AN INDUSTRIAL AUTOMATION SYSTEM AND AUTOMATION DEVICE
PROCÉDÉ ET SYSTÈME DE TRANSMISSION DE DONNÉES DANS UN SYSTÈME D'AUTOMATISATION INDUSTRIEL ET APPAREIL D'AUTOMATISATION INDUSTRIEL

(43) Veröffentlichungstag der Anmeldung: 25.12.2024
(73) Patentinhaber: Siemens Aktiengesellschaft, 80333 München (DE)
(72) Erfinder: Albrecht, Harald, 90475 Nürnberg (DE); Fischer, Thomas, 91056 Erlangen (DE); Höme, Stephan, 91126 Schwabach (DE)
(74) Vertreter: Siemens Patent Attorneys

(56) Entgegenhaltungen:
- PFROMMER JULIUS ET AL: "Open Source OPC UA PubSub Over TSN for Realtime Industrial Communication", 2018 IEEE 23RD INTERNATIONAL CONFERENCE ON EMERGING TECHNOLOGIES AND FACTORY AUTOMATION (ETFA), IEEE, vol. 1, 4 September 2018 (2018-09-04), pages 1087 - 1090, XP033426010, DOI: 10.1109/ETFA.2018.8502479
- DRAHOS PETER ET AL: "Trends in industrial communication and OPC UA", 2018 CYBERNETICS & INFORMATICS (K&I), IEEE, 31 January 2018 (2018-01-31), pages 1 - 5, XP033346488, ISBN: 978-1-5386-4419-5, [retrieved on 20180412], DOI: 10.1109/CYBERI.2018.8337560

## Beschreibung

Die vorliegende Erfindung betrifft ein Verfahren zur Datenübermittlung innerhalb eines industriellen Automatisierungssystems, ein System zur Durchführung eines solchen Verfahrens und ein Automatisierungsgerät zum Empfang von Steuerungs-, Mess- bzw. Status-Daten umfassenden Nutzdaten.

Industrielle Automatisierungssysteme dienen zur Überwachung, Steuerung und Regelung von technischen Prozessen, insbesondere im Bereich Fertigungs-, Prozess- und Gebäudeautomatisierung, und ermöglichen einen Betrieb von Steuerungseinrichtungen, Sensoren, Maschinen und industriellen Anlagen, der möglichst selbständig und unabhängig von menschlichen Eingriffen erfolgen soll. Aufgrund einer ständig steigenden Bedeutung von Informationstechnik für Automatisierungssysteme, die zahlreiche vernetzte Steuerungs- bzw. Rechnereinheiten umfassen, gewinnen Verfahren zur zuverlässigen Bereitstellung von über ein Automatisierungssystem verteilten Funktionen für eine Bereitstellung von Überwachungs-, Steuerungs- und Regelungsfunktionen verstärkt an Bedeutung. Eine besondere Problematik resultiert in industriellen Automatisierungssystemen regelmäßig aus einem Meldungsverkehr mit verhältnismäßig vielen, aber relativ kurzen Nachrichten, wodurch obige Probleme verstärkt werden.

MQTT (MQ Telemetry Transport oder Message Queue Telemetry Transport) ist ein Nachrichtenprotokoll für Maschine-zu-Maschine-Kommunikation (M2M), das für eine Übertragung von Nachrichten mit Telemetriedaten zwischen einem Publisher-Kommunikationsgerät und einem Subscriber-Kommunikationsgerät vorgesehen ist (siehe http://mqtt.org/). Dabei führt ein MQTT-Broker für Informationen zu sämtlichen Publishern und Subscribern von Telemetriedaten eine zentrale Datenbank. Über den MQTT-Broker werden durch Publisher bzw. Subscriber Befehle entgegen genommen bzw. Daten erfasst.

OPC Unified Architecture (OPC UA) definiert entsprechend IEC 62541 ein M2M-Kommunikationsprotokoll und ermöglicht, beispielsweise Maschinenparameter, Regelungsgrößen oder Messwerte semantisch zu beschreiben, so dass derartige Maschinendaten automatisiert ausgewertet werden können. Insbesondere umfasst OPC UA ein objekt-orientiertes Namensraum-Konzept einschließlich Metadaten zur Objektbeschreibung. Durch OPC UA Server wird ein Instanz- und Typsystem bereitgestellt, innerhalb dessen Clients navigieren und Informationen abrufen können. Darüber hinaus definiert OPC UA mehrere Discovery-Mechanismen zur Bekanntmachung von kompatiblen Automatisierungsgeräten und deren Funktionen bzw. Eigenschaften.

DE 10 138 363 A1 offenbart ein Verfahren zur Gewährleistung der Dienstgüte von Internet-Anwendungen, bei dem Internet-Anwendungen unter Ausnutzung der zum Startzeitpunkt der Internet-Anwendung vorhandenen Ressourcen des IP-Zugangsnetzes und des Endsystems automatisch angepasst und optimiert werden. Von Internet-Anwendungen werden die QoS-Kommunikationsanforderungen (Quality of Service) an das IP-Zugangsnetz erfasst und als Anwendungsprofile gespeichert. Bei Aktivierung einer Internet-Anwendung werden die aktuell vorhandenen Netzressourcen des IP-Zugangsnetzes mit den gespeicherten Anwendungsprofilen verglichen, und es werden Steuerdaten ermittelt. Anhand der ermittelten Steuerdaten wird die Bereitstellung der Netzressourcen für die betreffende Internet-Anwendung optimiert. Die Optimierung bezieht sich dabei auf einen angepassten zeitlichen Ablauf und die Ermittlung der unter Kostenaspekten (Übertragungskosten) günstigsten Konstellation.

Aus EP 3 576 376 A1 ist bekannt, dass zumindest ein erstes Automatisierungsgerät innerhalb eines industriellen Automatisierungssystems Steuerungs-, Mess- bzw. Status-Daten umfassende Nutzdaten zum Abruf oder Empfang durch mehrere zweite Automatisierungsgeräte verfügbar macht. Das erste Automatisierungsgerät sendet zyklisch erste Informationen zur Ankündigung verfügbarer Nutzdaten an eine vorgegebene erste Multicast-Adresse innerhalb des industriellen Automatisierungssystems. Die ersten Informationen umfassen jeweils Angaben über das erste Automatisierungsgerät, eine zweite Multicast-Adresse, über die Angaben zu verfügbaren Nutzdaten verfügbar gemacht werden, und zweite Informationen zur Adressierung von Nutzdaten, mit denen das erste Automatisierungsgerät Nutzdaten verfügbar macht. Die zweiten Automatisierungsgeräte empfangen an die zweite Multicast-Adresse gesendete Angaben zu verfügbaren Nutzdaten. Außerdem empfangen die zweiten Automatisierungsgeräte anhand der ausgelesenen zweiten Informationen ausgewählte Nutzdaten.

Ergänzend zum weit verbreiteten M2M-Kommunikationsprotokoll OPC UA Client/Server realisiert OPC UA PubSub (OPC UA, Part 14) ein Publisher-Subscriber-Modell, das für einen Datenaustausch zwischen Dienstanbietern (Publisher) und beliebig vielen Dienstnutzern (Subscriber) verwendet wird. Dabei machen Publisher ihre Daten völlig unabhängig und insbesondere ohne vorherige Subscriber-seitige Anforderung verfügbar. Subscriber empfangen nur von denjenigen Publishern Daten, für die sie beispielsweise im Rahmen einer Inbetriebsetzung einer Anlage konfiguriert worden sind. Nachrichten von Publishern umfassen insbesondere eine Reihe von Datenfeldern, anhand derer Subscriber für sie relevante Nachrichten herausfiltern können. Diese Datenfelder sind üblicherweise ISO/OSI-Schicht 5 oder höher zugeordnet. Gängige Netzwerkadapter können Nachrichten von Publishern jedoch nur anhand von MAC- bzw. IP-Adresse und ggf. UDP-Port filtern. Erst mit speziellen, umfangreicher programmierbaren Netzwerkadaptern ist Subscriberseitig eine wirksame Vorfilterung von beispielsweise an eine gemeinsame Subscriber-Broadcast-Adresse von gerichteten Publisher-Nachrichten möglich, um eine unnötige Belastung von Subscriber-Systemen zu vermeiden. Derartige Netzwerkadapter sind allerdings aufwendig bzw. teuer.

Der vorliegenden Erfindung liegt die Aufgabe zugrunde, ein Verfahren zur Datenübermittlung innerhalb eines industriellen Automatisierungssystems anzugeben, das bei Dienstnutzerseitiger Verwendung von Netzwerkadaptern, die keine Nachrichten- bzw. Datenfeldfilterung auf höheren Protokollschichten unterstützen, eine effiziente Verarbeitung einer Vielzahl durch Dienstanbieter bereitgestellter Nutzdaten ermöglicht, sowie geeignete Vorrichtungen zur Durchführung des Verfahrens zu schaffen.

Diese Aufgabe wird erfindungsgemäß durch ein Verfahren mit den in Anspruch 1 genannten Merkmalen, durch ein Automatisierungsgerät mit den in Anspruch 12 angegebenen Merkmalen und durch ein System mit den in Anspruch 13 angegebenen Merkmalen gelöst. Vorteilhafte Weiterbildungen der vorliegenden Erfindung sind in den abhängigen Patentansprüchen angegeben.

Entsprechend dem erfindungsgemäßen Verfahren zur Datenübermittlung innerhalb eines industriellen Automatisierungssystem macht zumindest ein erstes Automatisierungsgerät innerhalb des industriellen Automatisierungssystems Steuerungs-, Mess- bzw. Status-Daten umfassende Nutzdaten zum Empfang durch in zweiten Automatisierungsgeräten ablaufenden Steuerungsanwendungen verfügbar. Das erste Automatisierungsgerät sendet die Nutzdaten oder eine Nutzdaten-Auswahl umfassende Datagramme an eine oder mehrere Multicast-Gruppen. Dabei registrieren sich die zweiten Automatisierungsgeräte als Teilnehmer selektiv zumindest in einer Multicast-Gruppe. Vorzugsweise macht das erste Automatisierungsgerät die Nutzdaten für die zweiten Automatisierungsgeräte entsprechend OPC UA PubSub verfügbar. In diesem Fall agiert das erste Automatisierungsgerät als Publisher, während die zweiten Automatisierungsgeräte als Subscriber agieren.

Die zweiten Automatisierungsgeräte weisen jeweils zumindest einen Netzwerkadapter auf, der den Multicast-Gruppen zugeordnete empfangene Datagramme erfindungsgemäß über einen Socket, der einer Netzwerk-Protokollstapel-Funktionseinheit eines Betriebssystems des jeweiligen zweiten Automatisierungsgeräts zugeordnet ist, an eine Filtereinheit des jeweiligen zweiten Automatisierungsgeräts weiterleitet. Die Netzwerkadapter der zweiten Automatisierungsgeräte umfassen jeweils insbesondere eine PHY- und MAC-Komponente. Die Sockets sind vorzugsweise Express Data Path Sockets (XDP Sockets).

Darüber hinaus wird eine Bereitstellung der Sockets vorteilhafterweise über eine Anwendungsprogrammierschnittstelle der Filtereinheit durch die Steuerungsanwendungen angefragt. Dementsprechend kann die Bereitstellung der Sockets über diese Anwendungsprogrammierschnittstelle an die Steuerungsanwendungen durchgeführt werden. Auf diese Weise können Sockets schnell und sicher angefragt und an anfragende Prozesse bereitgestellt werden.

Anhand durch die Steuerungsanwendungen jeweils vorgegebener Weiterleitungskriterien verwirft die Filtereinheit erfindungsgemäß die weitergeleiteten Datagramme oder leitet sie an die jeweilige Steuerungsanwendung weiter. Dabei erfolgt mittels der Sockets ohne Bearbeitung durch das Betriebssystem des jeweiligen zweiten Automatisierungsgeräts ein direktes Weiterleiten der Datagramme zu den Steuerungsanwendungen bzw. ein direktes Verwerfen der Datagramme.

Mit der vorliegenden Erfindung können insbesondere weitverbreitete und kostengünstige Netzwerkkarten verwendet werden, die auf Hardware-Ebene lediglich über begrenzte Filterressourcen verfügen. Dies wird mittels Netzwerkadapter-naher, Subscriber-seitiger Filtereinheiten erreicht, die über Sockets an die Netzwerkadapter angebunden werden. Eine derartige vorgelagerte Filterung empfangener Datagramme führt damit nicht zu einer Subscriber-seitigen Belastung von Netzwerk-Stacks in Host-Betriebssystemen.

Entsprechend einer vorteilhaften Ausgestaltung der vorliegenden Erfindung sendet das erste Automatisierungsgerät zyklisch erste Informationen zur Ankündigung verfügbarer Nutzdaten an eine vorgegebene erste Multicast-Adresse innerhalb des industriellen Automatisierungssystems. Dabei umfassen die ersten Informationen Angaben über das erste Automatisierungsgerät und zumindest eine zweite Multicast-Adresse, über die ausgewählte Nutzdaten verfügbar gemacht werden. Damit können die zweiten Automatisierungsgeräte die ersten Informationen anhand jeweils ausgewählter Angaben filtern und aus ausgewählten ersten Informationen jeweils die zweite Multicast-Adresse auslesen. Vorzugsweise registrieren sich die zweiten Automatisierungsgeräte als Teilnehmer in der Multicast-Gruppe, die der jeweils ausgelesenen zweite Multicast-Adresse zugeordnet ist. Auf diese Weise können die zweiten Automatisierungsgeräte an die jeweilige zweite Multicast-Adresse gesendete ausgewählte Nutzdaten empfangen.

Vorzugsweise werden die Steuerungsanwendungen jeweils mittels zumindest einer Ablaufsteuerungskomponente bereitgestellt, die in eine auf dem jeweiligen zweiten Automatisierungsgerät installierte Ablaufsteuerungsumgebung ladbar und dort ausführbar ist. Dabei laufen die Ablaufsteuerungskomponenten innerhalb der Ablaufsteuerungsumgebung isoliert voneinander ab und nutzen gemeinsam einen Betriebssystemkern des jeweiligen zweiten Automatisierungsgeräts. Insbesondere können die Ablaufsteuerungskomponenten Container, wie Docker Container, WebAssembly- oder Java Bytecode sein, während die Ablaufsteuerungsumgebung beispielsweise eine Container-Laufzeitumgebung, z.B. Docker Engine, eine WebAssembly-Laufzeitumgebung oder eine Java Virtual Machine ist. Mittels der Ablaufsteuerungsumgebung erfolgt vorzugsweise ein Anlegen, Löschen bzw. Verknüpfen von virtuellen Ressourcen. Dabei umfassen die virtuellen Ressourcen neben Containern beispielsweise auch virtuelle Kommunikationsnetze und diesen zugeordnete Verbindungen.

Darüber hinaus können die Ablaufsteuerungskomponenten auch Container-Gruppen umfassen, beispielsweise Pods. Grundsätzlich können für die Ablaufsteuerungskomponenten auch alternative Micro-Virtualisierungskonzepte, wie Snaps, oder orchestrierte Container-Laufzeitumgebungen, wie podman oder Kubernetes, verwendet werden. Speicherabbilder für Container können beispielsweise aus einem durch eine Vielzahl von Nutzern lesend bzw. schreibend zugreifbaren Speicher- und Bereitstellungssystem abgerufen werden.

Für eine Weiterleitung von Multicast-Datagrammen mit ausgewählten Nutzdaten vom ersten Automatisierungsgerät über Netzinfrastrukturgeräte an die zweiten Automatisierungsgeräte werden durch das erste Automatisierungsgerät bzw. die zweiten Automatisierungsgeräte vorzugsweise Dienstgüteanforderungen kennzeichnende Dienstgüteparameter spezifiziert. In den Netzinfrastrukturgeräten werden jeweils bei ausreichender Verfügbarkeit Ressourcen zur Übermittlung der Multicast-Datagramme entsprechend den spezifizierten Dienstgüteparametern reserviert. Dabei wird die Verfügbarkeit durch eine übergeordnete Kommunikationssteuerungseinheit des Automatisierungssystems bzw. die Netzinfrastrukturgeräte überprüft. Die Netzinfrastrukturgeräte können insbesondere Switches oder Bridges sein. Dabei umfassen die Ressourcen zur Übermittlung der Multicast-Datagramme beispielsweise nutzbare Übertragungszeitfenster, Bandbreite, zugesicherte maximale Latenz, Queue-Anzahl, Queue-Cache bzw. Adress-Cache in Switches oder Bridges.

Entsprechend einer besonders bevorzugten Ausgestaltung der vorliegenden Erfindung wird eine Weiterleitung der Multicast-Datagramme über die Netzinfrastrukturgeräte mittels Frame Preemption, insbesondere gemäß IEEE 802.1Q, mittels Time-Aware Shaper, insbesondere gemäß IEEE 802.1Q, mittels Credit-Based Shaper, insbesondere gemäß IEEE 802.1Q, mittels Burst Limiting Shaper, mittels Peristaltic Shaper und/oder mittels Priority-Based Shaper gesteuert. Auf diese Weise kann deterministisches Kommunikationsverhalten auf Basis standardisierter, kostengünstiger Komponenten sichergestellt werden.

Das erfindungsgemäße Automatisierungsgerät ist für ein industrielles Automatisierungssystem geeignet und dafür eingerichtet, sich als Teilnehmer selektiv zumindest in einer Multicast-Gruppe zu registrieren. Außerdem weist das Automatisierungsgerät zumindest einen Netzwerkadapter auf, der dafür eingerichtet ist, Multicast-Gruppen zugeordnete empfangene Datagramme über einen Socket, der einer Netzwerk-Protokollstapel-Funktionseinheit eines Betriebssystems des Automatisierungsgeräts zugeordnet ist, an eine Filtereinheit des Automatisierungsgeräts weiterzuleiten. Die Filtereinheit ist dafür eingerichtet, die weitergeleiteten Datagramme anhand durch Steuerungsanwendungen jeweils vorgegebener Weiterleitungskriterien zu verwerfen oder an die jeweilige Steuerungsanwendung weiterzuleiten.

Das erfindungsgemäße System ist zur Durchführung eines Verfahrens entsprechend vorangehenden Ausführungen vorgesehen und umfasst zumindest ein erstes Automatisierungsgerät und mehrere zweite Automatisierungsgeräte, wobei die zweiten Automatisierungsgeräte entsprechend vorangehenden Ausführungen ausgestaltet sind. Das erste Automatisierungsgerät ist dafür eingerichtet, innerhalb des industriellen Automatisierungssystems Steuerungs-, Mess- bzw. Status-Daten umfassende Nutzdaten zum Empfang durch in zweiten Automatisierungsgeräten ablaufenden Steuerungsanwendungen verfügbar zu machen. Ferner ist das erste Automatisierungsgerät dafür eingerichtet, die Nutzdaten oder eine Nutzdaten-Auswahl umfassende Datagramme an eine oder mehrere Multicast-Gruppen zu senden.

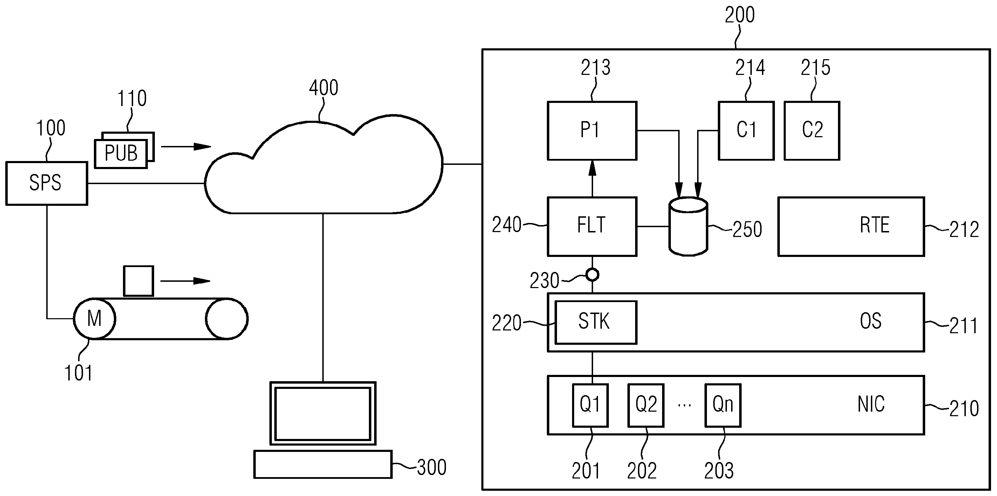

Die vorliegende Erfindung wird nachfolgend an einem Ausführungsbeispiel anhand der Zeichnung näher erläutert. Es zeigt
- Figur: ein System zur Datenübermittlung an eine oder mehrere Multicast-Gruppe innerhalb eines industriellen Automatisierungssystems.

Das in der Figur dargestellte System umfasst ein erstes Automatisierungsgerät 100, beispielsweise eine speicherprogrammierbare Steuerung zur Steuerung einer angeschlossenen Maschine 101, das über ein Kommunikationsnetz 400 eines industriellen Automatisierungssystems Steuerungs-, Mess- bzw. Status-Daten umfassende Nutzdaten zum Empfang durch in zweiten Automatisierungsgeräten 200, 300 ablaufenden Steuerungsanwendungen verfügbar macht. Das Kommunikationsnetz 400, umfasst vorteilhafterweise eine Vielzahl von Daten weiterleitenden Kommunikationsgeräten, insbesondere Switche, und stellt somit Konnektivität für eine Vielzahl erster und zweiter Automatisierungsgeräte bereit. Die zweiten Automatisierungsgeräte können neben speicherprogrammierbaren Steuerungen oder numerischen Maschinensteuerungen beispielsweise Hosts 200 mit Überwachungs- und Steuerungsfunktionen oder Bedien- und Beobachtungsstationen 300 sein.

Das erste Automatisierungsgerät 100 sendet die Nutzdaten oder eine Nutzdaten-Auswahl umfassende Datagramme 110 an eine oder mehrere Multicast-Gruppen. Dabei registrieren sich die zweiten Automatisierungsgeräte 200, 300 als Teilnehmer selektiv zumindest in einer Multicast-Gruppe. Im vorliegenden Ausführungsbeispiel macht das erste Automatisierungsgerät 100 die Nutzdaten für die zweiten Automatisierungsgeräte 200, 300 entsprechend OPC UA PubSub verfügbar. Dabei agiert das erste Automatisierungsgerät 100 als Publisher, während die zweiten Automatisierungsgeräte 200, 300 als Subscriber agieren. Grundsätzlich kann einem Automatisierungsgerät gleichzeitig sowohl eine Rolle als Publisher als auch eine Rolle als Subscriber zugeordnet werden, beispielsweise wenn es einerseits Automatisierungsdienste bereitstellt und andererseits Automatisierungsdienste anderer Geräte nutzt.

Subscriber 200, 300 benötigen von Publishern 100 grundsätzlich Meta-Daten bzw. Angaben zu verfügbaren Nutzdaten. Die Meta-Daten werden vorteilhafterweise regelmäßig über eine spezielle UDP-Multicast-Gruppe bzw. UDP-Multicast-Adresse bekannt gegeben. Zusätzlich benötigen Subscriber 200, 300 zum Abrufen bzw. Empfangen von Nutzdaten je nach verwendetem Kommunikationsnetz-Protokoll beispielsweise eine dem jeweiligen Publisher 100 zugeordnete UDP-Multicast-Adresse oder für Time Sensitive Networks (TSN) einen Stream Identificator entsprechend IEEE 802.1Qat. Üblicherweise werden sowohl UDP-Multicast-Adressen als auch TSN Stream Identificators dynamisch vergeben.

Um durch Publisher 100 bereitgestellte Nutzdaten abzurufen bzw. zu empfangen, senden Subscriber 200, 300 beispielsweise eine Anforderung zur Übermittlung eines Endpunkt-URL (Uniform Resource Locator) an einem Server eines OPC UA Global Discovery Service (GDS). Hierzu spezifiziert der jeweilige Subscriber 200, 300 insbesondere eine PublisherID des jeweiligen Publishers 100. Die PublisherID kann beipielsweise neben einer dem Publisher 100 zugeordneten WriterGroupID im Subscriber 200, 300 konfiguriert sein.

Nach Übermittlung des Endpunkt-URL baut der Subscriber 200, 300 beispielsweise mittels eines OPC UA Client eine Client-Server-Verbindung zu einem OPC UA Server des Publishers 100 auf. Über diese Client-Server-Verbindung sendet der Subscriber 200, 300 eine Anforderung zur Übermittlung der durch den Publisher 100 verwendeten UDP-Multicast-Adressen bzw. des Stream Identificators. Zusätzlich kann der Subscriber 200, 300 auch eine Security Group ID über die Client-Server-Verbindung abfragen.

Sobald der Subscriber 200, 300 angeforderte Informationen zur Adressierung von Nutzdaten und Meta-Daten vom Publisher 100 über die Client-Server-Verbindung empfängt, kann sich der Subscriber 200, 300 mittels einer OPC UA Subscriber-Komponente mit der UDP-Multicast-Gruppe verbinden, an die die Nutzdaten beschreibende Meta-Daten durch eine OPC UA Publisher-Komponente des Publishers 100 bereitgestellt werden. Bei zusätzlichen Sicherheitsanforderungen kann der Subscriber 200, 300 bei einem Security Key Service nach erfolgreicher Autorisierung unter Nennung o.g. Security Group ID Schlüsselmaterial zum Entschlüsseln der Nutzdaten abrufen. Abschließend empfängt der Subscriber 200, 300 über die UDP-Multicast-Adresse für Nutzdaten bzw. mittels des Stream Identificators die Datagramme 110 mit den Nutzdaten vom Publisher 100 und decodiert diese anhand der Meta-Daten.

Exemplarisch wird eine Filterung der Datagramme 110 mit abonnierten Nutzdaten durch die zweiten Automatisierungsgeräte anhand des Host 200 erläutert. Die nachfolgenden Ausführungen gelten für alle anderen zweiten Automatisierungsgeräte in entsprechender Weise. Der Host 200 weist einen Netzwerkadapter 210 auf, der den Multicast-Gruppen zugeordnete empfangene Datagramme 110 über RX/TX-Queues 201-203 des Netzwerkadapters 210 und über einen Socket 230, der einer Netzwerk-Protokollstapel-Funktionseinheit 220 eines Betriebssystems 211 des Host 200 zugeordnet ist, an eine Filtereinheit 240 des Host 200 weiterleitet. Der Socket 230 ist vorzugsweise ein Express Data Path Socket (XDP Sockets). Eine Bereitstellung des Socket 230 kann beispielsweise über eine Anwendungsprogrammierschnittstelle durch auf dem Host 200 ablaufende bzw. installierte Steuerungsanwendungen 213-215 angefragt werden. Nach Erzeugen eines der Filtereinheit 240 zugeordneten Socket 230 wird dieser an eine verfügbare RX/TX-Queue 201-203 des Netzwerkadapters 210 gebunden.

Während die Steuerungsanwendung 213 als ein auf einem Betriebssystem 211 des Host 200 ablaufendes Programm implementiert ist, werden die Steuerungsanwendungen 214-215 im vorliegenden Ausführungsbeispiel mittels Ablaufsteuerungskomponenten, die in eine auf dem Betriebssystem 211 des Host 200 als Anwendung installierte Ablaufsteuerungsumgebung 212 ladbar und dort ausführbar sind, bzw. mittels Containern implementiert. Dabei laufen die Ablaufsteuerungskomponenten bzw. Container innerhalb der Ablaufsteuerungsumgebung 212 isoliert voneinander ab und nutzen gemeinsam einen Betriebssystemkern des Host 200. Alternativ zu Containern können die Ablaufsteuerungskomponenten auch WebAssembly- oder Java Bytecode sein. Dementsprechend ist die Ablaufsteuerungsumgebung 212 eine Container-Laufzeitumgebung, eine WebAssembly-Laufzeitumgebung oder eine Java Virtual Machine.

Die Filtereinheit 240 verwirft die weitergeleiteten Datagramme 110 anhand durch die Steuerungsanwendungen 213-215 jeweils vorgegebener Weiterleitungskriterien, die in einer der Filtereinheit 240 zugeordneten Datenbank 250 gespeichert sind, oder leitet die Datagramme 110 an die jeweilige Steuerungsanwendung 213-215 weiter. Dabei erfolgt mittels des Socket 230 ohne Bearbeitung durch das Betriebssystem 211 des Host 200 ein direktes Weiterleiten der Datagramme 110 zu den Steuerungsanwendungen 213-215 bzw. ein direktes Verwerfen der Datagramme 110.

Entsprechend einer bevorzugten Ausführungsform für eine Weiterleitung von Multicast-Datagrammen 110 mit ausgewählten Nutzdaten vom ersten Automatisierungsgerät 100 über Netzinfrastrukturgeräte, die vom Kommunikationsnetz 400 umfasst sind, an die zweiten Automatisierungsgeräte 200, 300 durch das erste Automatisierungsgerät 100 bzw. die zweiten Automatisierungsgeräte 200, 300 Dienstgüteanforderungen kennzeichnende Dienstgüteparameter spezifiziert. In den Netzinfrastrukturgeräten werden jeweils bei ausreichender Verfügbarkeit Ressourcen zur Übermittlung der Multicast-Datagramme 110 entsprechend den spezifizierten Dienstgüteparametern reserviert. Die Verfügbarkeit wird beispielsweise durch eine übergeordnete Kommunikationssteuerungseinheit des Automatisierungssystems bzw. durch die Netzinfrastrukturgeräte selbst überprüft.

Die Netzinfrastrukturgeräte sind insbesondere Switches oder Bridges. Dementsprechend umfassen die Ressourcen zur Übermittlung der Multicast-Datagramme 110 nutzbare Übertragungszeitfenster, Bandbreite, zugesicherte maximale Latenz, Queue-Anzahl, Queue-Cache bzw. Adress-Cache in Switches oder Bridges. Die Weiterleitung der Multicast-Datagramme 110 über die Netzinfrastrukturgeräte wird vorteilhafterweise mittels Frame Preemption, insbesondere gemäß IEEE 802.1Q, mittels Time-Aware Shaper, insbesondere gemäß IEEE 802.1Q, mittels Credit-Based Shaper, insbesondere gemäß IEEE 802.1Q, mittels Burst Limiting Shaper, mittels Peristaltic Shaper bzw. mittels Priority-Based Shaper gesteuert.

## Patentansprüche

1. Verfahren zur Datenübermittlung innerhalb eines industriellen Automatisierungssystems, bei dem
- zumindest ein erstes Automatisierungsgerät (100) innerhalb des industriellen Automatisierungssystems Steuerungs-, Mess- und/oder Status-Daten umfassende Nutzdaten zum Empfang durch in zweiten Automatisierungsgeräten (200, 300) ablaufenden Steuerungsanwendungen (213-215) verfügbar macht,
- das erste Automatisierungsgerät die Nutzdaten oder eine Nutzdaten-Auswahl umfassende Datagramme (110) an eine oder mehrere Multicast-Gruppen sendet, wobei sich die zweiten Automatisierungsgeräte als Teilnehmer selektiv zumindest in einer Multicast-Gruppe registrieren,
- die zweiten Automatisierungsgeräte jeweils zumindest einen Netzwerkadapter (210) aufweisen, der den Multicast-Gruppen zugeordnete empfangene Datagramme über einen Socket (230), der einer Netzwerk-Protokollstapel-Funktionseinheit (220) eines Betriebssystems (211) des jeweiligen zweiten Automatisierungsgeräts zugeordnet ist, an eine Filtereinheit (240) des jeweiligen zweiten Automatisierungsgeräts weiterleitet,
- die Filtereinheit die weitergeleiteten Datagramme anhand durch die Steuerungsanwendungen jeweils vorgegebener Weiterleitungskriterien verwirft oder an die jeweilige Steuerungsanwendung weiterleitet, wobei mittels der Sockets ohne Bearbeitung durch das Betriebssystem des jeweiligen zweiten Automatisierungsgeräts ein direktes Weiterleiten der Datagramme zu den Steuerungsanwendungen und/oder ein direktes Verwerfen der Datagramme erfolgt.

2. Verfahren nach Anspruch 1,
bei dem das erste Automatisierungsgerät zyklisch erste Informationen zur Ankündigung verfügbarer Nutzdaten an eine vorgegebene erste Multicast-Adresse innerhalb des industriellen Automatisierungssystems sendet, bei dem die ersten Informationen Angaben über das erste Automatisierungsgerät und zumindest eine zweite Multicast-Adresse umfassen, über die ausgewählte Nutzdaten verfügbar gemacht werden, und bei dem die zweiten Automatisierungsgeräte die ersten Informationen anhand jeweils ausgewählter Angaben filtern und aus ausgewählten ersten Informationen jeweils die zweite Multicast-Adresse auslesen.

3. Verfahren nach Anspruch 2,
bei dem sich die zweiten Automatisierungsgeräte als Teilnehmer in der Multicast-Gruppe registrieren, die der jeweils ausgelesenen zweite Multicast-Adresse zugeordnet ist, und bei dem die zweiten Automatisierungsgeräte an die jeweilige zweite Multicast-Adresse gesendete ausgewählte Nutzdaten empfangen.

4. Verfahren nach einem der Ansprüche 1 bis 3,
bei dem das erste Automatisierungsgerät die Nutzdaten für die zweiten Automatisierungsgeräte entsprechend OPC UA PubSub verfügbar macht, bei dem das erste Automatisierungsgerät als Publisher agiert und bei dem die zweiten Automatisierungsgeräte als Subscriber agieren.

5. Verfahren nach einem Ansprüche 1 bis 4,
bei dem die Sockets Express Data Path Sockets, XDP Sockets, sind.

6. Verfahren nach einem der Ansprüche 1 bis 5,
bei dem eine Bereitstellung der Sockets über eine Anwendungsprogrammierschnittstelle der Filtereinheit durch die Steuerungsanwendungen angefragt wird.

7. Verfahren nach einem der Ansprüche 1 bis 6,
bei dem die Steuerungsanwendungen (214-215) jeweils mittels zumindest einer Ablaufsteuerungskomponente bereitgestellt werden, die in eine auf dem jeweiligen zweiten Automatisierungsgerät installierte Ablaufsteuerungsumgebung (212) ladbar und dort ausführbar ist, und bei dem die Ablaufsteuerungskomponenten innerhalb der Ablaufsteuerungsumgebung isoliert voneinander ablaufen und gemeinsam einen Betriebssystemkern des jeweiligen zweiten Automatisierungsgeräts nutzen.

8. Verfahren nach Anspruch 7,
bei dem die Ablaufsteuerungskomponenten Container, WebAssembly- oder Java Bytecode sind und bei dem die Ablaufsteuerungsumgebung eine Container-Laufzeitumgebung, eine WebAssembly-Laufzeitumgebung oder eine Java Virtual Machine ist.

9. Verfahren nach einem der Ansprüche 1 bis 8,
bei dem für eine Weiterleitung von Multicast-Datagrammen (110) mit ausgewählten Nutzdaten vom ersten Automatisierungsgerät über Netzinfrastrukturgeräte an die zweiten Automatisierungsgeräte (200, 300) durch das erste Automatisierungsgerät (100) und/oder die zweiten Automatisierungsgeräte Dienstgüteanforderungen kennzeichnende Dienstgüteparameter spezifiziert werden und bei dem in den Netzinfrastrukturgeräten jeweils bei ausreichender Verfügbarkeit Ressourcen zur Übermittlung der Multicast-Datagramme entsprechend den spezifizierten Dienstgüteparametern reserviert werden, wobei die Verfügbarkeit durch eine übergeordnete Kommunikationssteuerungseinheit des Automatisierungssystems und/oder die Netzinfrastrukturgeräte überprüft wird.

10. Verfahren nach Anspruch 9,
bei dem die Netzinfrastrukturgeräte Switches oder Bridges sind und bei dem die Ressourcen zur Übermittlung der Multicast-Datagramme nutzbare Übertragungszeitfenster, Bandbreite, zugesicherte maximale Latenz, Queue-Anzahl, Queue-Cache und/oder Adress-Cache in Switches oder Bridges umfassen.

11. Verfahren nach einem der Ansprüche 9 oder 10,
bei dem eine Weiterleitung der Multicast-Datagramme über die Netzinfrastrukturgeräte mittels Frame Preemption, insbesondere gemäß IEEE 802.1Q, mittels Time-Aware Shaper, insbesondere gemäß IEEE 802.1Q, mittels Credit-Based Shaper, insbesondere gemäß IEEE 802.1Q, mittels Burst Limiting Shaper, mittels Peristaltic Shaper und/oder mittels Priority-Based Shaper gesteuert wird.

12. Automatisierungsgerät für ein industrielles Automatisierungssystem,
- wobei das Automatisierungsgerät dafür eingerichtet ist, sich als Teilnehmer selektiv zumindest in einer Multicast-Gruppe zu registrieren,
- wobei das Automatisierungsgerät zumindest einen Netzwerkadapter (210) aufweist, der dafür eingerichtet ist, Multicast-Gruppen zugeordnete empfangene Datagramme (110) über einen Socket (230), der einer Netzwerk-Protokollstapel-Funktionseinheit (220) eines Betriebssystems (211) des Automatisierungsgeräts (200) zugeordnet ist, an eine Filtereinheit (240) des Automatisierungsgeräts weiterzuleiten,
- wobei die Filtereinheit dafür eingerichtet ist, die weitergeleiteten Datagramme anhand durch Steuerungsanwendungen jeweils vorgegebener Weiterleitungskriterien zu verwerfen oder an die jeweilige Steuerungsanwendung weiterzuleiten, wobei mittels der Sockets ohne Bearbeitung durch das Betriebssystem des Automatisierungsgeräts ein direktes Weiterleiten der Datagramme zu den Steuerungsanwendungen und/oder ein direktes Verwerfen der Datagramme erfolgt.

13. System zur Durchführung eines Verfahrens nach einem der Ansprüche 1 bis 11 mit
- zumindest einem ersten Automatisierungsgerät (100),
- wobei das erste Automatisierungsgerät dafür eingerichtet ist, innerhalb des industriellen Automatisierungssystems Steuerungs-, Mess- und/oder Status-Daten umfassende Nutzdaten zum Empfang durch in zweiten Automatisierungsgeräten ablaufenden Steuerungsanwendungen (213-215) verfügbar zu machen,
- wobei das erste Automatisierungsgerät ferner dafür eingerichtet ist, die Nutzdaten oder eine Nutzdaten-Auswahl umfassende Datagramme (110) an eine oder mehrere Multicast-Gruppen zu senden,
- mehreren zweiten Automatisierungsgeräten (200, 300) gemäß Anspruch 12.

## Claims

1. Method for data transmission within an industrial automation system, in which
- at least a first automation device (100) makes payload data, which comprises control, measurement and/or status data, available within the industrial automation system for receipt by control applications (213-215) running in second automation devices (200, 300),
- the first automation device sends the payload data or datagrams (110) comprising a selection of payload data to one or more multicast groups, wherein the second automation devices register as participants at least in one multicast group on a selective basis,
- the second automation devices each have at least one network adapter (210), which forwards received datagrams assigned to the multicast groups via a socket (230), which is assigned to a network protocol stack function unit (220) of an operating system (211) of the respective second automation device, to a filter unit (240) of the respective second automation device,
- the filter unit discards the forwarded datagrams on the basis of forwarding criteria specified by the control applications in each case, or forwards them to the respective control application, wherein a direct forwarding of the datagrams to the control applications and/or a direct discarding of the datagrams takes place by means of the sockets without processing by the operating system of the respective second automation device.

2. Method according to claim 1,
in which the first automation device cyclically sends first information for announcement of available payload data to a specified first multicast address within the industrial automation system, in which the first information comprises details regarding the first automation device and at least a second multicast address, via which selected payload data is made available, and in which the second automation devices filter the first information on the basis of selected details in each case and read out the second multicast address in each case from selected first information.

3. Method according to claim 2,
in which the second automation devices register as participants in the multicast group, which is assigned to the second multicast address read out in each case, and in which the second automation devices receive selected payload data sent to the respective second multicast address.

4. Method according to one of claims 1 to 3,
in which the first automation device makes the payload data available for the second automation devices according to OPC UA PubSub, in which the first automation device acts as publisher and in which the second automation devices act as subscribers.

5. Method according to one of claims 1 to 4,
in which the sockets are Express Data Path sockets, XDP sockets.

6. Method according to one of claims 1 to 5,
in which a provision of the sockets via an application programming interface of the filter unit is requested by the control applications.

7. Method according to one of claims 1 to 6,
in which the control applications (214-215) are in each case provided by means of at least one sequence control component, which can be loaded into a sequence control environment (212) installed on the respective second automation device, where it can be executed, and in which the sequence control components run isolated from one another within the sequence control environment and together use an operating system kernel of the respective second automation device.

8. Method according to claim 7,
in which the sequence control components are containers, WebAssembly or Java bytecode and in which the sequence control environment is a container runtime environment, a WebAssembly runtime environment or a Java virtual machine.

9. Method according to one of claims 1 to 8,
in which, for forwarding multicast datagrams (110) with selected payload data from the first automation device via network infrastructure devices to the second automation devices (200, 300), service quality parameters which denote service quality requirements are specified by the first automation device (100) and/or the second automation devices, and in which resources are reserved in the network infrastructure devices with sufficient availability in each case for transmitting the multicast datagrams according to the specified service quality parameters, wherein the availability is reviewed by a higher-level communication control unit of the automation system and/or the network infrastructure devices.

10. Method according to claim 9,
in which the network infrastructure devices are switches or bridges and in which the resources for transmitting the multicast datagrams comprise usable transfer time windows, bandwidth, guaranteed maximum latency, queue number, queue cache and/or address cache in switches or bridges.

11. Method according to one of claims 9 or 10,
in which a forwarding of the multicast datagrams via the network infrastructure devices is controlled by means of frame pre-emption, in particular according to IEEE 802.1Q, by means of time-aware shaper, in particular according to IEEE 802.1Q, by means of credit-based shaper, in particular according to IEEE 802.1Q, by means of burst limiting shaper, by means of peristaltic shaper and/or by means of priority-based shaper.

12. Automation device for an industrial automation system,
- wherein the automation device is configured for registering as a participant in a multicast group on a selective basis,
- wherein the automation device has at least one network adapter ("10), which is configured for forwarding received datagrams (110) assigned to multicast groups via a socket (230), which is assigned to a network protocol stack function unit (220) of an operating system (211) of the automation device (200), to a filter unit (240) of the automation device,
- wherein the filter unit is configured for discarding the forwarded datagrams on the basis of forwarding criteria specified by control applications in each case, or forwards them to the respective control application, wherein a direct forwarding of the datagrams to the control applications and/or a direct discarding of the datagrams takes place by means of the sockets without processing by the operating system of the automation device.

13. System for performing a method according to one of claims 1 to 11 with
- at least a first automation device (100),
- wherein the first automation device is configured for making payload data, which comprises control, measurement and/or status data, available within the industrial automation system for receipt by control applications (213-215) running in second automation devices,
- wherein the first automation device is further configured for sending the payload data or datagrams (110) comprising a selection of payload data to one or more multicast groups,
- multiple second automation devices (200, 300) according to claim 12.

## Revendications

1. Procédé de transmission de données dans un système d'automatisation industriel, dans lequel
- au moins un premier appareil (100) d'automatisation dans le système d'automatisation industriel rend des données utiles, comprenant des données de commande de mesure et/ou de statut, disponibles pour la réception par des applications (213 à 215) de commande se déroulant dans des deuxièmes appareils (200, 300) d'automatisation,
- le premier appareil d'automatisation envoie les données utiles ou un datagramme (110) comprenant un choix de données utiles à un ou à plusieurs groupes multicast, dans lequel les deuxièmes appareils d'automatisation s'enregistrent comme participant sélectivement au moins dans un groupe multicast,
- les deuxièmes appareils d'automatisation ont respectivement au moins un adapteur (210) de réseau, qui achemine, à une unité (240) de filtrage du deuxième appareil d'automatisation respectif, des datagrammes reçus, associés au groupe multicast, par un socket (230), qui est affecté à une unité (220) fonctionnelle de pile de protocole de réseau d'un système (211) de fonctionnement du deuxième appareil d'automatisation respectif,
- l'unité de filtrage rejette respectivement, suivant des critères d'acheminement donnés à l'avance, les datagrammes acheminés à l'aide des applications de commande ou les achemine à l'application de commande respective, dans lequel, au moyen du socket, sans traitement par le système de fonctionnement du deuxième appareil d'automatisation respectif, a lieu un acheminement direct des datagrammes aux applications de commande et/ou un rejet direct des datagrammes.

2. Procédé suivant la revendication 1,
dans lequel le premier appareil d'automatisation envoie cycliquement des premières informations pour l'annonce de données utiles disponibles à une première adresse multicast donnée à l'avance dans le système d'automatisation industriel, dans lequel les premières informations comprennent des indications sur le premier appareil d'automatisation et au moins une deuxième adresse multicast, par laquelle les données utiles choisies sont rendues disponibles, et dans lequel les deuxièmes appareils d'automatisation filtrent les premières informations à l'aide respectivement d'indications sélectionnées et lisent, dans des premières informations sélectionnées, respectivement la deuxième adresse multicast.

3. Procédé suivant la revendication 2,
dans lequel les deuxièmes appareils d'automatisation s'enregistrent comme participant dans le groupe multicast, qui est affecté à la deuxième adresse multicast lue respectivement, et dans lequel les deuxièmes appareils d'automatisation reçoivent des données utiles choisies, envoyées à la deuxième adresse multicast respective.

4. Procédé suivant l'une des revendications 1 à 3,
dans lequel le premier appareil d'automatisation rend disponible les données utiles pour les deuxièmes appareils d'automatisation, conformément à OPC UA PubSub, dans lequel le premier appareil d'automatisation agit comme éditeur, et dans lequel les deuxièmes appareils d'automatisation agissent comme souscripteurs.

5. Procédé suivant l'une des revendications 1 à 4,
dans lequel les sockets sont des express data path sockets, XDP sockets.

6. Procédé suivant l'une des revendications 1 à 5,
dans lequel une préparation des sockets est demandée par les applications de commande par l'intermédiaire d'une interface de programmation d'applications de l'unité de filtrage.

7. Procédé suivant l'une des revendications 1 à 6,
dans lequel les applications (214 à 215) de commande sont mises à disposition respectivement au moyen d'au moins un composant de commande de déroulement, qui peut être chargé et y être exécuté dans un environnement (212) de commande de déroulement, installé sur le deuxième appareil d'automatisation respectif, et dans lequel les composants de commande de déroulement se déroulent de manière isolée les uns des autres à l'intérieur de l'environnement de commande de déroulement et utilisent conjointement un noyau de système de fonctionnement du deuxième appareil d'automatisation respectif.

8. Procédé suivant la revendication 7,
dans lequel les composants de commande de déroulement sont des conteneurs des webassembly ou des bytecode Java, et dans lequel l'environnement de commande de déroulement est un environnement de temps de marche de conteneur et un environnement de temps de marche de webassembly ou une machine virtuelle Java.

9. Procédé suivant l'une des revendications 1 à 8,
dans lequel, pour un acheminement de datagrammes (110) multicast ayant des données utiles choisies, du premier appareil d'automatisation aux deuxièmes appareils (200, 300) d'automatisation en passant par des appareils d'infrastructure de réseau, on précise par le premier appareil (100) d'automatisation et/ou les deuxièmes appareils d'automatisation, des paramètres de qualité de service caractérisant des exigences de qualité de service, et dans lequel, dans les appareils d'infrastructure de réseau, on réserve respectivement, à disponibilité suffisante, des ressources pour la transmission de datagrammes multicast correspondants aux paramètres de qualité de service précisés, dans lequel la disponibilité est contrôlée par une unité de commande de communication supérieure hiérarchiquement du système d'automatisation et/ou par les appareils d'infrastructure du réseau.

10. Procédé suivant la revendication 9,
dans lequel les appareils d'infrastructure du réseau sont des switches ou des bridges, et dans lequel les ressources comprennent des créneaux temporels de transmission utiles pour la transmission des datagrammes multicast, des largeurs de bande, une latence maximum sécurisée, un nombre de queue, un cache-queue et/ou un cache-adresse dans des switches ou des bridges.

11. Procédé suivant l'une des revendications 9 ou 10,
dans lequel un acheminement des datagrammes multicast est commandé, au moyen de Frame Preemption, en particulier suivant IEEE 802.1Q, au moyen de Time-Aware-Shaper, en particulier suivant IEEE 802.10, au moyen de Credit-Based Shaper, en particulier suivant IEEE 802.10, au moyen de Burst Limiting Shaper, au moyen de Peristaltic Shaper et/ou au moyen de Priority-Based Shaper.

12. Appareil d'automatisation pour un système d'automatisation industriel,
- dans lequel l'appareil d'automatisation est agencé pour s'enregistrer comme participant sélectivement au moins dans un groupe multicast,
- dans lequel l'appareil d'automatisation a au moins un adapteur (210) de réseau, qui est agencé pour acheminer, à une unité (240) de filtrage du deuxième appareil d'automatisation respectif, des datagrammes (110) reçus associés au groupe multicast par un socket (230), qui est affecté à une unité (220) fonctionnelle de pile de protocole de réseau d'un système (211) de fonctionnement du deuxième appareil (200) d'automatisation respectif,
- dans lequel l'unité de filtrage est agencée pour rejeter respectivement, suivant des critères d'acheminement donnés à l'avance, les datagrammes acheminés à l'aide des applications de commande ou les achemine à l'application de commande respective, dans lequel, au moyen du socket, sans traitement par le système de fonctionnement du deuxième appareil d'automatisation respectif, a lieu un acheminement direct des datagrammes aux applications de commande et/ou un rejet direct des datagrammes.

13. Système pour effectuer un procédé suivant l'une des revendications 1 à 11, comprenant
- au moins un premier appareil (100) d'automatisation,
- dans lequel le premier appareil d'automatisation est agencé pour rendre dans le système d'automatisation industriel des données utiles, comprenant des données de commande de mesure et/ou statut, disponibles pour la réception par des applications (213 à 215) de commande se déroulant dans des deuxièmes appareils d'automatisation,
- dans lequel le premier appareil d'automatisation est agencé, en outre, pour envoyer les données utiles ou un datagramme (110) comprenant un choix de données utiles à un ou à plusieurs groupes multicast,
- plusieurs deuxièmes appareils (200, 300) d'automatisation suivant la revendication 12.
